# EUROPEAN PATENT APPLICATION

(11) **EP 3 892 695 A1**
(43) Date of publication of application: **13.10.2021**
(21) Application number: 19893597.5
(22) Date of filing: 06.12.2019
(51) Int. Cl.: C09D 183/04, C08G 77/14, C08J 7/04, C09D 7/40, C09D 5/00

(54) **RESIN COMPOSITION FOR ANTI-GLARE COATING AND ANTI-GLARE COATING FILM PREPARED THEREBY**

(30) Priority: 07.12.2018 KR 20180156565; 05.12.2019 KR 20190160469
(71) Applicant: Kolon Industries, Inc., Seoul 07793 (KR)
(72) Inventor: AHN, Sang Hyun, Seoul 07793 (KR); LEE, Dong Hee, Seoul 07793 (KR); YANG, Pil Rye, Seoul 07793 (KR); BAEK, Sung Hoon, Seoul 07793 (KR); SUH, Won Gyu, Seoul 07793 (KR); KIM, Hang Geun, Seoul 07793 (KR)
(74) Representative: Ter Meer Steinmeister & Partner
(86) International application number: PCT/KR2019/017160
(87) International publication number: WO 2020/116980

(57) **Abstract**

Disclosed are an anti-glare coating resin composition and an anti-glare coating film including the same. Specifically, provided are an anti-glare coating resin composition that includes a siloxane resin containing an epoxy group and an acrylic group, and further includes organic or inorganic particles, and thus ensures hardness, scratch resistance and processability, and provides anti-glare property by introduction of particles, and an anti-glare coating film produced using the same. Also, it is possible to realize hardness, abrasion resistance and anti-glare property of a film resin prepared using the resin composition and a film produced using the same.

## Description

### [Technical Field]

The present disclosure relates to an anti-glare coating resin composition and an anti-glare coating film including the same.

### [Background Art]

An anti-glare coating film is defined as a film having a function of reducing the reflection of external light using scattered reflection due to surface irregularities, and is applied to the surface of various display panels in order to prevent deterioration in display visibility due to external reflected light and to reduce eye fatigue due to the reflected light. In addition, the anti-glare coating film disperses internal light, thus further prevent glare. In general, a method of scattering light by performing coating with a composition having particles therein is used. However, this method has weak scattering ability, so a method of using light scattering through surface irregularities is commonly used. When the surface irregularities that are applied are severe, the anti-glare property is excellent due to the reflection of external light, but the visibility of the display may be deteriorated. In addition, since surface irregularities are exposed to the outside, damage may occur upon physical impact, and thus the development of high-hardness AG films for covering windows is required. The deterioration in visibility due to surface irregularities is emerging as an issue that needs to be solved, and the development of AG films that have sufficient anti-glare property and high visibility and are free from glare problems is essential. For this purpose, an anti-reflection (AR) film including a low refractive material and a high refractive material which are alternately stacked to reduce the reflection of incident light through destructive interference during the reflection process on the interface, has been applied, but AG films are preferred due to the process simplicity and low cost thereof.

As the prior art, Korean Patent Laid-open Publication No. 2017-0082922 discloses an anti-glare resin composition that realizes a high resolution through image clarity and exhibits an anti-glare property owing to surface irregularities formed thereon, and has desirable mechanical properties for a thin film, and an anti-glare film using the same. However, when aggregates dispersed therein have a large size of 2 to 100 µm, there is still a considerably high possibility of occurrence of glare in displays.

Meanwhile, Korean Patent No. 10-0378340 discloses an anti-glare coating layer including different types of light-transmitting particles having different refractive indexes, but has a disadvantage of poor scratch resistance due to organic particles.

In addition, Korean Patent No. 10-0296369 discloses an anti-glare coating layer that includes a light-transmitting diffuser in a binder resin and thus has an internal haze of 1 to 15, but has a risk of low visibility due to high internal haze.

As such, the development of a window cover coating material having both an anti-glare property and high hardness is expected to become an essential technology for wider application of polymer films for displays.

### [Disclosure]

### [Technical Problem]

Therefore, the present disclosure has been made in view of the above problems, and it is one object of the present disclosure to provide an anti-glare coating resin composition that includes a siloxane resin containing an epoxy group and an acrylic group, and includes organic or inorganic particles, and an anti-glare coating film produced using the same, and thus ensures hardness, scratch resistance and processability, and provides anti-glare property by introduction of particles. It is another object of the present disclosure to realize hardness, abrasion resistance and anti-glare property of a film resin prepared using the resin composition and a film produced using the same.

### [Technical Solution]

In accordance with one aspect of the present disclosure to solve the technical problems, provided is an anti-glare coating film including: a substrate; a high- hardness coating layer formed on the substrate; and an anti-glare coating layer formed on the high-hardness coating layer, wherein the high-hardness coating layer is formed from a first composition including a first siloxane resin, and the anti-glare coating layer is formed from a second composition including a second siloxane resin and particles, wherein each of the first siloxane resin and the second siloxane resin is formed by polymerization of at least one alkoxysilane selected from an alkoxysilane represented by the following Formula 1 and an alkoxysilane represented by the following Formula 2,

<Formula 1> R¹ₙSi(OR²)₄₋ₙ

wherein R¹ is a C1-C3 linear, branched or cyclic alkylene group substituted with epoxy or acryl, R² is a C1-C8 linear, branched or cyclic alkyl group, and n is an integer of 1 to 3,

<Formula 2> Si(OR³)₄

wherein R³ represents a C1 to C4 linear or branched alkyl group.

The particles may have an average particle diameter of 0.01 µm to 5 µm.

The anti-glare coating layer may have a surface roughness (Ra) of 100 to 300 nm.

The high-hardness coating layer may have a thickness of 10 to 50 µm.

The anti-glare coating layer may have a thickness of 1 to 3 µm.

The particles may be organic particles or inorganic particles.

The inorganic particles may include at least one of silica particles and silicon particles.

The organic particles may include at least one of styrenic beads, acrylic beads, and cross-linked acrylic beads.

The particles may be present in an amount of 1 to 5% by weight with respect to a solid content of the second composition.

The substrate may include at least one of a polyimide film, a polyethylene naphthalate film, a tri-acetyl cellulose film, a cyclo olefin polymer film, a cyclo olefin copolymer film and an acrylic film.

The anti-glare coating film may have a gloss unit of 40 to 100.

The anti-glare coating film may have a transmittance of 90 or more.

The anti-glare coating film may have a haze of 30 or less.

### [Advantageous Effects]

The anti-glare coating resin composition according to the present disclosure and the anti-glare coating film prepared using the same can ensure hardness, scratch resistance and processability, and can realize an excellent anti-glare property through introduction of particles.

### [Description of Drawings]

The above and other objects, features and other advantages of the present disclosure will be more clearly understood from the following detailed description taken in conjunction with the accompanying drawings, in which:
FIG. 1 is a schematic cross-sectional view of an anti-glare coating film according to an embodiment of the present disclosure;
FIG. 2 is a cross-sectional view of the anti-glare coating film specifically showing particles and a matrix of the anti-glare coating layer; and
FIG. 3 is a schematic cross-sectional view of the anti-glare coating film of Comparative Example excluding a high-hardness coating layer.

### [Best Mode]

In one aspect, the present disclosure is directed to a resin composition for a high-hardness coating layer and resin composition for an anti-glare coating layer, wherein the resin composition for the high-hardness coating layer includes a first siloxane resin, and the resin composition for the anti-glare coating layer includes a second siloxane resin and particles, wherein each of the first siloxane resin and the second siloxane resin is formed by polymerization of at least one alkoxysilane selected from an alkoxysilane represented by the following Formula 1 and an alkoxysilane represented by the following Formula 2,

<Formula 1> R¹ₙSi(OR²)₄₋ₙ

wherein R¹ is a C1-C3 linear, branched or cyclic alkylene group substituted with epoxy or acryl, R² is a C1-C8 linear, branched or cyclic alkyl group, and n is an integer of 1 to 3,

<Formula 2> Si(OR³)₄

wherein R³ represents a C1 to C4 linear or branched alkyl group.

The resin composition for the high-hardness coating layer may be used to produce a high-hardness coating layer, and the resin composition for the high-hardness coating layer is called a "first composition". The resin composition for the anti-glare coating layer can be used to produce an anti-glare coating layer, and the resin composition for the anti-glare coating layer is called a "second composition". The first composition and the second composition are mutually independent, and the contents of remaining ingredients excluding the particles may be identical to or different from one another. In the following description, for convenience of description, the second composition is described as one in which particles are merely added to the first composition, but the present disclosure is not limited thereto.

In addition, the first siloxane resin and the second siloxane resin are mutually independent, and may be identical to or different from one another. The following description describes the first and second siloxane resins as one siloxane resin for convenience of description, but the present disclosure is not limited thereto.

The present disclosure is preferably a resin composition for a high-hardness coating layer that includes a siloxane resin resulting from chemical bonding of a compound including an alkoxysilane containing an epoxy group or an acrylic group and a trialkoxysilane having a silane T structure.

Specifically, the resin composition for the high-hardness coating layer includes a siloxane resin obtained by reacting an alkoxysilane including an epoxy group or an acrylic group with water, thereby increasing the hardness and wear resistance of a film or sheet including a cured product prepared therefrom.

Hardness and flexibility can be controlled by controlling the amount of reagent that is added, thereby providing a resin composition that is optimal for the intended use. Therefore, the resin composition for the high-hardness coating layer of the present disclosure has high surface hardness and scratch resistance due to silane, and the film or sheet including the cured coating product having high-hardness according to the present disclosure is prepared by the photocuring reaction of siloxane prepared through the reaction between water and alkoxysilane containing epoxy or acryl.

More specifically, the alkoxysilane containing epoxy or acryl may be represented by Formula 1 above, and more preferably includes at least one selected from 3-glycidoxypropyl trimethoxysilane, 3-glycidoxypropyl triethoxysilane, 3-glycidoxypropyl tripropoxysilane, 3-methacryloxypropyl trimethoxysilane, 3-methacryloxypropyl triethoxysilane, 3-acryloxypropyl trimethoxysilane, 3-acryloxypropyl triethoxysilane, 3-acryloxypropyl tripropoxysilane, 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

By polymerizing a siloxane resin from a compound including the alkoxysilane represented by Formula 2, the present disclosure is capable of securing surface hardness through dense cross-linking of siloxane.

In the present disclosure, the synthesis of the siloxane resin may be carried out at room temperature, but may alternatively be carried out while performing stirring at 50 to 120°C for 1 to 120 hours. The catalyst for conducting the reaction may be an acid catalyst such as hydrochloric acid, acetic acid, hydrogen fluoride, nitric acid, sulfuric acid or iodic acid, a base catalyst such as ammonia, potassium hydroxide, sodium hydroxide, barium hydroxide or imidazole, and an ion exchange resin such as Amberite. These catalysts may be used alone or in combination. In this case, the amount of the catalyst may be about 0.0001 parts to about 10 parts by weight based on 100 parts by weight of the siloxane resin, but is not particularly limited thereto. When the reaction is conducted, water or alcohol is produced as a byproduct. When removing this water or alcohol, the reverse reaction can be suppressed and the forward reaction can be performed more quickly, so that control of the reaction rate is possible through this principle. After completion of the reaction, the byproduct can be removed by heating under reduced pressure.

As described above, the siloxane resin synthesized according to the present disclosure has an integral value in a T1 range (-48 to -55 ppm) of 0 to 10, an integral value in a T2 range (-55 to -62 ppm) of 10 to 20 and an integral value in a T3 range (-62 to -75 ppm) of 80, wherein the integral value means a value obtained through integration of the T3 range based on 80 after ²⁹Si NMR measurement based on 0 ppm of TMS (tetramethylsilane). In this case, the NMR value is a value obtained by measuring NMR by ²⁹Si NMR (JEOL FT-NMR) and performing integration. The polymer that is measured is diluted in CDCl₃ to a concentration of about 10%.

An integral value in the T1 range (-48 to -55 ppm) of 0 to 10 means that the T1 structure present in the siloxane resin polymer is present in 0 to 10% of the entire structure of the polymer, wherein the T1 structure is a structure in which a silicon atom (Si), which is the central atom of the repeating unit of the polymer, is connected to the siloxane resin polymer chain only at one end. That is, the T1 structure is the terminal end of the polymer. An integral value in the T2 range (-55 to - 62 ppm) of 10 to 20 means that the T2 structure present in the siloxane resin polymer is present in 10 to 20% of the entire structure of the polymer, and the T2 structure is a structure in which a silicon atom (Si), which is the central atom of the repeating unit of the polymer, is connected to the siloxane resin polymer chain only at two ends. An integral value in the T3 range (-62 to -75 ppm) of 80 means that the T3 structure present in the siloxane resin polymer is present in 80% of the entire structure of the polymer, wherein the T3 structure is a structure in which a silicon atom (Si), which is the central atom of the repeating unit of a polymer, is connected through a network structure to the siloxane resin polymer chain at three ends.

As described above, the siloxane resin of the present disclosure is preferably a siloxane resin that includes a trialkoxysilane having a silane T structure, and thereby includes the largest amount of the T3 structure.

Meanwhile, in addition to the siloxane resin, the first composition may further include, as another component, at least one additive selected from the group consisting of an organic solvent, a photoinitiator, a thermal initiator, an antioxidant, a leveling agent and a coating aid. In this case, it is possible to provide a first composition for coating suitable for various applications by controlling the kind and content of the additive that is used. In the present disclosure, a first composition for coating capable of improving hardness, abrasion resistance, flexibility and curling resistance is preferably provided.

The initiator according to the present disclosure is, for example, a photo-polymerization initiator such as an organometallic salt and a heat-polymerization initiator such as an amine or an imidazole. In this case, the amount of the initiator that is added is preferably about 0.01 to 10 parts by weight based on 100 parts by weight of the total amount of the siloxane resin. When the content of the initiator is less than 0.01 parts by weight, the curing time of the coating layer required to obtain sufficient hardness is lengthened and efficiency is thus deteriorated. When the content of the initiator is more than 10 parts by weight, the yellowness of the coating layer may be increased, thus making it difficult to obtain a transparent coating layer.

Also, the organic solvent may include, but is not limited to, at least one selected from the group consisting of: ketones such as acetone, methyl ethyl ketone, methyl butyl ketone and cyclohexanone; cellosolves such as methyl cellosolve and butyl cellosolve; ethers such as ethyl ether and dioxane; alcohols such as isobutyl alcohol, isopropyl alcohol, butanol and methanol; halogenated hydrocarbons such as dichloromethane, chloroform and trichloroethylene; and hydrocarbons such as normal hexane, benzene and toluene. In particular, since the viscosity of the siloxane resin can be controlled by controlling the amount of the organic solvent that is added, the amount of the organic solvent can be suitably controlled in order to further improve processability or to control the thickness of the coating film.

The first composition may include an antioxidant to inhibit oxidation resulting from polymerization, but is not limited thereto.

The first composition may further include a leveling agent or a coating aid, but is not limited thereto.

The polymerization of the siloxane resin may include, but is not limited to, light irradiation or heating.

The resin composition for the anti-glare coating layer preferably includes a siloxane resin resulting from chemical bonding of a compound including at least one alkoxysilane selected from the alkoxysilane represented by Formula 1 and the alkoxysilane represented by Formula 2, and particles having an average particle size of 0.01 µm to 5 µm.

The resin composition for the anti-glare coating layer according to the present disclosure includes the siloxane resin resulting from chemical bonding of the compound including at least one alkoxysilane and particles having an average particle size of 0.01 µm to 5 µm, thereby advantageously realizing surface irregularities and obtaining both excellent anti-glare property and high hardness.

The average particle diameter of the particles is 0.01 µm to 5 µm, preferably 0.012 µm to 4 µm.

When the average particle diameter is less than 0.01 µm, the resultant sparkling physical property is advantageous, but there may be limitation in realizing haze (Hz) and a desired gloss unit (GU), and thus excess content may be required. When the average particle diameter exceeds 5 µm, sparkling may occur and the particles may be visible, causing deterioration of display visibility.

The particles include organic particles or inorganic particles. An organic particle is a particle having a functional group containing a hydrocarbon and an inorganic particle is a particle having no functional group containing a hydrocarbon.

Examples of organic particles may include, but are not limited to, styrenic beads, acrylic beads, and cross-linked acrylic beads. Styrene beads are beads having a styrenic functional group, acrylic beads are beads having an acrylic functional group, and crosslinked acrylic beads are beads having a crosslinked acrylic functional group.

For example, the inorganic particles include silica particles, but the present disclosure is not limited thereto.

Silica particles may be typically classified into fumed silica particles and precipitated silica particles depending on the difference in silica production method. Fumed silica particles are generally vaporized quartz sand produced by subjecting silicon tetrachloride (SiCl₄) to flame pyrolysis or an electric arc at 3,000°C. The fumed silica particles are silica particles obtained after pyrolysis, and are highly pure nanosilica. The fumed silica particles may be of a commercially available type. Precipitated silica particles are silica particles obtained through a process of precipitation using a solvent. In general, the size of fumed silica particles is smaller than the size of precipitated silica particles.

The particles of the present disclosure are preferably silica particles, which are advantageous in terms of securing surface hardness, among organic or inorganic particles.

The particles are preferably present in an amount of 1 to 5% by weight with respect to the solid content of the resin composition for the anti-glare coating layer. The solid content of the resin composition for the anti-glare coating layer is the solid content of the resin composition obtained by reacting the alkoxysilanes represented by Formulae 1 and 2 with each other.

When the content of the particles is within the range, it is appropriately matched with the coating thickness, thus ensuring a stable haze (Hz) and gloss unit (GU).

When the content of particles with respect to the solid content of the resin composition for the anti-glare coating layer is less than 1% by weight, the surface roughness (Ra) of the anti-glare coating layer becomes small, and the surface of the anti-glare coating layer becomes smooth, thus reducing the anti-glare property. That is, the GU exceeds 100. Meanwhile, when the content of particles with respect to the solid content of the resin composition for the anti-glare coating layer is more than 5%, the surface roughness (Ra) of the anti-glare coating layer is increased, excessive irregularities are generated on the surface of the anti-glare coating layer, diffuse reflection occurs, haze is increased, and visibility is deteriorated. That is, the GU is less than 40.

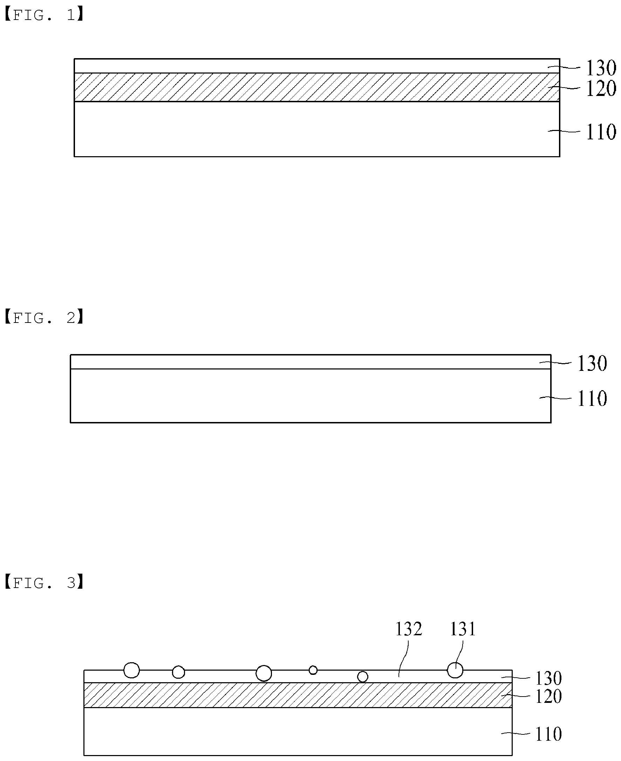

FIG. 1 is a schematic cross-sectional view of an anti-glare coating film according to an embodiment of the present disclosure.

Another preferred embodiment of the present disclosure provides a structure in which a high-hardness coating layer 120 and an anti-glare coating layer 130 are stacked on a substrate 110 in that order, wherein the anti-glare coating layer 130 has an average particle diameter of 0.01 µm to 5 µm.

The anti-glare coating layer may have a surface roughness (Ra) of 100 to 300 nm.

The anti-glare coating film has a structure in which two layers, namely the high-hardness coating layer 120 and the anti-glare coating layer 130, are stacked. In the case of a single-layer structure including only the anti-glare coating layer 130 without the high-hardness coating layer 120, the strength of the film decreases and the internal haze becomes 0.9 or more, resulting in poor visibility. Meanwhile, in the case of the single-layer structure including only the high-hardness coating layer 120 without the anti-glare coating layer 130, the anti-glare property is poor. Therefore, there is a need for an anti-glare coating film having a laminated structure including the high-hardness coating layer 120 and the anti-glare coating layer 130.

Referring to FIG. 2, the structure of the anti-glare coating film of the present disclosure will be described in detail. The anti-glare coating film includes: a substrate 110; a high-hardness coating layer 120 on the substrate; and an anti-glare coating layer 130 on the high-hardness coating layer, wherein the anti-glare coating layer 130 includes particles 131 and a matrix 132. Here, the matrix 132 is a cured material including ingredients other than the particles, among the ingredients of the resin composition for the anti-glare coating layer.

As can be seen from FIG. 2, the particles 131 may protrude from the matrix 132 to the outside of the anti-glare coating layer 130, or may be embedded therein. Due to the particles 131 protruding from the matrix 132, the surface roughness Ra of the anti-glare coating layer 130 increases and thus the anti-glare property of the anti-glare coating film increases. However, when the surface roughness (Ra) of the anti-glare coating layer 130 is excessively increased, excessive diffuse reflection occurs, and visibility is thus reduced.

The substrate 110 is preferably a transparent substrate, and any substrate may be used without particular limitation as long as it is transparent. The substrate 110 may include a polyimide (PI) film, a polyethylene naphthalate (PEN) film, a tri-acetyl cellulose (TAC) film, a cyclo olefin polymer (COP) film, a cyclo olefin copolymer (COC) film, an acryl film or the like. Specifically, the use of transparent polyimide as a substrate is preferred in terms of excellent thermal properties, high modulus and high hardness of the film itself. The transparent substrate 110 has a thickness of 10 to 200 µm, preferably 20 to 100 µm. When the thickness of the substrate 110 is less than 10 µm, it is difficult to handle the film, and when the thickness exceeds 200 µm, economic efficiency cannot be obtained.

The high-hardness coating layer 120 is produced from the resin composition for the high-hardness coating layer including a siloxane resin resulting from chemical bonding of a compound including at least one alkoxysilane selected from the alkoxysilane represented by Formula 1 and the alkoxysilane represented by Formula 2, and the anti-glare coating layer 130 is produced from the resin composition for the anti-glare coating layer that includes a siloxane resin resulting from chemical bonding of a compound including at least one alkoxysilane selected from the alkoxysilane represented by Formula 1 and the alkoxysilane represented by Formula 2, and particles having an average particle size of 0.01 µm to 5 µm. The resin composition for the high-hardness coating layer and the resin composition for the anti-glare coating layer are as described above.

The anti-glare coating layer 130 preferably has surface roughness (Ra) of 100 to 300 nm, preferably 160 to 300 nm.

When the surface roughness is in the above range, there are advantages in securing surface sensitivity and gloss unit (GU) .

When the surface roughness (Ra) is less than 100 nm, the surface of the anti-glare coating layer 130 is smooth without irregularities, thus resulting in deterioration in an anti-glare property of the coating film and making the GU of the anti-glare coating film higher than 100. Meanwhile, when the surface roughness (Ra) exceeds 300 nm, the irregularities of the surface of the anti-glare coating layer 130 are excessively large, thus resulting in increased diffuse reflection of light and reduction in visibility. The GU of the film is less than 40.

The high-hardness coating layer 120 may have a thickness of 10 to 50 µm.

When the thickness of the high-hardness coating layer 120 is 10 to 50 µm, it is possible to obtain a film having a pencil strength and haze effective as an anti-glare coating film.

The anti-glare coating layer 130 may have a thickness of 1 µm to 3 µm, preferably 2 µm to 3 µm.

When the thickness of the anti-glare coating layer 130 satisfies 2 to 3 µm, the anti-glare property can be improved, and the effect of preventing particles from desorbing from the film can be obtained.

Specifically, when the thickness of the high-hardness coating layer 120 is within the range above, the present disclosure can achieve the desired level of pencil hardness. Since a pencil hardness of 9H is achieved when coating to a thickness of 50 µm, it is meaningless to exceed the thickness. In addition, when the thickness of the anti-glare coating layer 130 is less than 1 µm, the particles present in the anti-glare coating layer 130 may not be bonded to the anti-glare coating layer 130 with sufficient strength, thus disadvantageously causing a problem of detachment upon external impact. Meanwhile, when the thickness of the anti-glare coating layer 130 exceeds 3 µm, the particles contained in the anti-glare coating layer 130 do not protrude to the surface of the anti-glare coating layer 130, and irregularities on the surface of the anti-glare coating layer 130 become small, and thus the surface roughness (Ra) becomes small.

The average particle diameter of the particles 131 of the present disclosure is 0.01 µm to 5 µm, and the thickness of the anti-glare coating layer 130 is 1 µm to 3 µm. Accordingly, the particles 131 having an average particle diameter larger than the thickness of the anti-glare coating layer 130 protrude from the matrix 132 of the anti-glare coating layer 130, thereby increasing the surface roughness Ra of the anti-glare coating layer 130. The protruded particles 131 irregularly reflect light, thereby increasing the anti-glare property.

Further, a high-hardness coating layer 120 and an anti-glare coating layer 130 can be produced by forming the resin composition for coating using a method such as coating, casting or molding, followed by photopolymerization or thermal polymerization to form a cured product. In the case of photopolymerization, a uniform surface can be obtained by heat treatment prior to light irradiation. Heat treatment may be carried out at a temperature not lower than 40°C and not higher than about 300°C, but the present disclosure is not limited thereto. In addition, the amount of radiated light may be not less than 50 mJ/cm² and not more than 20,000 mJ/cm², but is not limited thereto.

### [Mode for Invention]

Hereinafter, the present disclosure will be described in more detail based on the following examples. The examples and comparative examples of the present disclosure will be described with reference to FIGS. 1 and 2 in detail.

FIG. 1 relates to an anti-glare coating film including a high-hardness coating layer, an anti-glare coating layer and a substrate according to Examples 1 to 5 of the present disclosure.

Meanwhile, FIG. 3 relates to anti-glare coating films of Comparative Examples 2 to 4 including only the anti-glare coating layer and the substrate, while excluding the high-hardness coating layer.

These examples are only provided for better understanding of the present disclosure, and should not be construed as limiting the scope of the present disclosure.

### <Example 1>

KBM-403 (Shin-Etsu Chemical Co., Ltd.), TEOS (Sigma-Aldrich Corporation) and distilled water were mixed at a molar ratio of 80 : 20 : 160, the resulting mixture was injected into a 1,000 mL flask, 0.1 g of a sodium hydroxide solution (in H₂O 1g) was added as a catalyst, and the mixture was stirred at a rate of 100 rpm with a mechanical stirrer at 65°C for 6 hours. Then, the resulting mixture was diluted with 2-butanone to realize a solid content of 50 wt%, and was then filtered through a 0.45 µm Teflon filter to obtain a siloxane resin having a weight average molecular weight of 7,400 and a PDI of 1.7 (GPC). In this case, the molecular weight and molecular weight distribution (polydispersity index, PDI) are the weight average molecular weight (Mw) and the number average molecular weight (Mn), obtained on the basis of polystyrene through gel permeation chromatography (GPC) (produced by Waters, model name: e2695). The polymer to be measured was dissolved in tetrahydrofuran to a concentration of 1% and was injected in an amount of 20 µl into GPC. The mobile phase used for GPC was tetrahydrofuran, and was introduced at a flow rate of 1.0 mL/min and the analysis was performed at 30°C. The column used herein was two Waters Styragel HR3 connected in series. The measurement was carried out at 40°C using a RI detector (2414 by Waters company) as a detector. In this case, PDI (molecular weight distribution) was calculated by dividing the measured weight average molecular weight by the number average molecular weight.

Next, 3 parts by weight of IRGACURE 250 (BASF Corporation), which is a photoinitiator, was added to 100 parts by weight of the siloxane resin to obtain a resin composition for a high-hardness coating layer. The resin composition for a high-hardness coating layer was coated on the surface of a polyimide substrate using a Mayer bar, dried at 100°C for 10 minutes in a drying oven and then exposed to an ultraviolet lamp having a wavelength of 315 nm for 30 seconds to produce a high-hardness coating layer having a thickness of 10 µm.

In addition, 1 wt% of precipitated silica particles (ACEMATT OK607, EVONIK Co., Ltd.) having an average particle diameter of 4 µm was added to the resin composition for the high-hardness coating layer, and was then stirred at a rate of 100 rpm for 1 hour at room temperature to obtain a resin composition for an anti-glare coating layer.

The resin composition for an anti-glare coating layer was coated on the high-hardness coating layer using a Mayer bar, dried at 100°C for 10 minutes in a drying oven, and then exposed to an ultraviolet lamp having a wavelength of 315 nm for 30 seconds to produce an anti-glare coating layer having a thickness of 2 µm.

### <Example 2>

An anti-glare coating film was produced by laminating an anti-glare coating layer in the same manner as in Example 1, except that 3 wt% of precipitated silica particles (ACEMATT OK607, EVONIK Co., Ltd.) having an average particle diameter of 4 µm was added to the resin composition for the high-hardness coating layer, and was then stirred for 1 hour at room temperature.

### <Example 3>

An anti-glare coating film was produced by laminating an anti-glare coating layer in the same manner as in Example 1, except that 5 wt% of precipitated silica particles (ACEMATT OK607, EVONIK Co., Ltd.) having an average particle diameter of 4 µm was added to the resin composition for the high-hardness coating layer and then stirred for 1 hour at room temperature.

### <Example 4>

An anti-glare coating film was produced by laminating an anti-glare coating layer in the same manner as in Example 1, except that 3 wt% of fumed silica particles (AEROSIL300, EVONIK Co., Ltd.) having an average particle diameter of 12 nm was added to the resin composition for high-hardness coating layer and then stirred for 1 hour at room temperature.

### <Example 5>

An anti-glare coating film was produced by laminating an anti-glare coating layer in the same manner as in Example 1, except that 5 wt% of fumed silica particles (AEROSIL300, EVONIK Co., Ltd.) having an average particle diameter of 12 nm was added to the resin composition for high-hardness coating layer, and then stirred for 1 hour at room temperature.

### <Comparative Example 1>

An anti-glare coating layer was produced in the same manner as in Example 1, except that particles were not added to the resin composition for the high-hardness coating layer.

### <Comparative Example 2>

1 wt% of fumed silica particles (AEROSIL300, EVONIK Co., Ltd.) having an average particle diameter of 12 nm was added to the resin composition for the high-hardness coating layer, and then stirred for 1 hour at room temperature to obtain a resin composition for an anti-glare coating layer, and the resin composition for an anti-glare coating layer was coated on the surface of polyimide, dried at 100°C for 10 minutes and then exposed to an ultraviolet lamp having a wavelength of 315 nm for 30 seconds to produce an anti-glare coating film including an anti-glare coating layer laminated to a thickness of 2 µm.

### <Comparative Example 3>

3 wt% of fumed silica particles (AEROSIL300, EVONIK Co., Ltd.) having an average particle diameter of 12 nm was added to the resin composition for the high-hardness coating layer, and then stirred for 1 hour at room temperature to obtain a resin composition for an anti-glare coating layer, and the resin composition for an anti-glare coating layer was coated on the surface of polyimide, dried at 100°C for 10 minutes and then exposed to an ultraviolet lamp having a wavelength of 315 nm for 30 seconds to produce an anti-glare coating film including a laminated anti-glare coating layer having a thickness of 2 µm.

### <Comparative Example 4>

5 wt% of fumed silica particles (AEROSIL300, EVONIK Co., Ltd.) having an average particle diameter of 12 nm was added to the resin composition for the high-hardness coating layer, and then stirred for 1 hour at room temperature to obtain a resin composition for an anti-glare coating layer, and the resin composition for the anti-glare coating layer was coated on the surface of polyimide, dried at 100°C for 10 minutes and then exposed to an ultraviolet lamp having a wavelength of 315 nm for 30 seconds to produce an anti-glare coating film including an anti-glare coating layer laminated to a thickness of 2 µm.

### <Measurement Example>

The physical properties of the anti-glare coating films produced in Examples and Comparative Examples were evaluated in accordance with the following methods, and the results are shown in Table 1 below.
(1) Transmittance (%): measured in accordance with ASTM D1003 using an HM-150 manufactured by Murakami Co., Ltd.
(2) Haze: measured in accordance with ASTM D1003 using an HM-150 manufactured by Murakami Co., Ltd.
(3) Gloss unit (GU): measured at 60° with a gloss meter, GM-3D produced by Murakami Co., Ltd.
(4) Surface hardness (Ra): pencil hardness was measured using a NV-2000 produced by Nanosystem Co., Ltd.
(5) Sparkling: The produced film was attached to an AG-untreated display and RGB light sources were evaluated using the naked eye.
   (Strong): Sparking was observed in all of R, G and B light sources
   (Medium): Sparkling was observed in two light sources among R, G, and B light sources
   (Weak): sparkling was observed in one light source of R, G, B light sources
   O.K.: sparkling was not observed
(6) Pencil hardness: measured in accordance with ASTM D3363 at a load of 1 kgf and at a rate of 180 mm/min using a pencil hardness tester produced by IMOTO Co., Ltd., Japan.
(7) Scratch resistance: whether or not scratching occurred was observed when #0000 steel wool was reciprocated 10 times under a load of 1.5 kg, and scratch resistance was evaluated based on the following criteria.
   - OK: scratching did not occur
   - NG: scratching occurred

**[Table 1]**

| Entries | TT (Transmittance) | Haze | Internal haze | GU | Ra (nm) | Sparkling | Pencil hardness | Scratch resistance |
|---|---|---|---|---|---|---|---|---|
| Ex. 1 | 91.6 | 2.4 | 0.5 | 98.5 | 110 | Weak | 5H | O.K. |
| Ex. 2 | 90.9 | 14.2 | 0.7 | 64.0 | 159 | Weak | 5H | O.K. |
| Ex. 3 | 90.6 | 29.8 | 0.8 | 42.8 | 260 | O.K. | 5H | O.K. |
| Ex. 4 | 91.8 | 4.6 | 0.6 | 97.6 | 180 | Weak | 5H | O.K. |
| Ex. 5 | 91.5 | 10.7 | 0.7 | 74.6 | 200 | Weak | 5H | O.K. |
| Comp. Ex. 1 | 92.0 | 0.4 | 0.3 | 150.5 | 20 | O.K. | 4H | O.K. |
| Comp. Ex. 2 | 91.3 | 2.7 | 0.9 | 120.5 | 80 | Weak | 5H | O.K. |
| Comp. Ex. 3 | 90.9 | 5.0 | 1.1 | 120.8 | 150 | Weak | 5H | O.K. |
| Comp. Ex. 4 | 90.7 | 11.2 | 1.7 | 102.3 | 200 | Weak | 5H | O.K. |

As can be seen from Table 1, as the content of the silica particles increases, the internal haze increases and thus the gloss unit (GU) decreases, and pencil hardness is increased compared to Comparative Example 1. When the haze is 30 or more, display visibility may be deteriorated. When GU is 100 or more, the effect of preventing glare cannot be obtained due to absence of the anti-glare property. When GU is 40 or less, visibility may be reduced due to increased diffuse reflection. Comparative Examples 2 to 4, using a single layer instead of a double layer, had internal haze higher than in the case of the double layer, and thus decreased visibility, and had higher GU than that of the double layer and thus a deteriorated anti-reflective property. As the content increases, surface roughness (Ra) increases, and depends on the type of particles. When Ra decreases, visibility increases, but the anti-glare property decreases, and when Ra increases, the anti-glare property may increase, but visibility may be deteriorated. Thus, Ra is preferably within the range of 100 to 300 nm.

Thus, experimentation showed that the double-layer coating film produced using the coating resin composition of the present disclosure enables all of hardness, scratch resistance and an anti-glare property to be realized, and thus is suitable as an anti-glare display protective film.

### [Description of reference numerals]

110: Substrate
120: High-hardness coating layer
130: Anti-glare coating layer
131: Particle
132: Matrix

## Claims

1. An anti-glare coating film comprising:
a substrate;
a high-hardness coating layer formed on the substrate; and
an anti-glare coating layer formed on the high-hardness coating layer,
wherein the high-hardness coating layer is formed from a first composition including a first siloxane resin, and
the anti-glare coating layer is formed from a second composition including a second siloxane resin and particles,
wherein each of the first siloxane resin and the second siloxane resin is formed by polymerization of at least one alkoxysilane selected from an alkoxysilane represented by the following Formula 1 and an alkoxysilane represented by the following Formula 2,
<Formula 1> R¹ₙSi(OR²)₄₋ₙ
wherein R¹ is a C1-C3 linear, branched or cyclic alkylene group substituted with epoxy or acryl, R² is a C1-C8 linear, branched or cyclic alkyl group, and n is an integer of 1 to 3,
<Formula 2> Si(OR³)₄
wherein R³ represents a C1 to C4 linear or branched alkyl group.

2. The anti-glare coating film according to claim 1, wherein the particles have an average particle diameter of 0.01 µm to 5 µm.

3. The anti-glare coating film according to claim 1, wherein the anti-glare coating layer has a surface roughness (Ra) of 100 to 300 nm.

4. The anti-glare coating film according to claim 1, wherein the high-hardness coating layer has a thickness of 10 to 50 µm.

5. The anti-glare coating film according to claim 1, wherein the anti-glare coating layer has a thickness of 1 to 3 µm.

6. The anti-glare coating film according to claim 1, wherein the particles are organic particles or inorganic particles.

7. The anti-glare coating film according to claim 6, wherein the inorganic particles comprise silica particles.

8. The anti-glare coating film according to claim 6, wherein the organic particles comprise at least one of styrenic beads, acrylic beads and cross-linked acrylic beads.

9. The anti-glare coating film according to claim 1, wherein the particles are present in an amount of 1 to 5% by weight with respect to a solid content of the second composition.

10. The anti-glare coating film according to claim 1, wherein the substrate comprises at least one of a polyimide film, a polyethylene naphthalate film, a tri-acetyl cellulose film, a cyclo olefin polymer film, a cyclo olefin copolymer film and an acrylic film.

11. The anti-glare coating film according to claim 1, wherein the anti-glare coating film has a gloss unit of 40 to 100.

12. The anti-glare coating film according to claim 1, wherein the anti-glare coating film has a transmittance of 90 or more.

13. The anti-glare coating film according to claim 1, wherein the anti-glare coating film has a haze of 30 or less.
